# FASCICULE DE BREVET EUROPEEN

(11) **EP 4 061 609 B1**
(45) Date de publication et mention de la délivrance du brevet: **26.07.2023**
(21) Numéro de dépôt: 20804312.5
(22) Date de dépôt: 17.11.2020
(51) Int. Cl.: B29C 49/42, B29C 49/58, B29C 49/06, B29L 31/00, B29K 67/00, B29C 49/78

(54) **PROCEDE D'ORIENTATION D'UNE PREFORME DANS UN MOULE**
VERFAHREN ZUM AUSRICHTEN EINER VORFORM IN EINER GUSSFORM
METHOD FOR ORIENTING A PREFORM IN A MOULD

(30) Priorité: 20.11.2019 FR 1912942
(43) Date de publication de la demande: 28.09.2022
(73) Titulaire: Sidel Participations, 76930 Octeville-sur-Mer (FR)
(72) Inventeur: BOURVELLEC, Loïc, 76930 Octeville-sur-Mer (FR); PASQUIER, Hervé, 76930 Octeville-sur-Mer (FR); MOUCHELET, Marc, 76930 Octeville-sur-Mer (FR)
(74) Mandataire: Sidel Group
(86) Numéro de dépôt international: PCT/EP2020/082402
(87) Numéro de publication internationale: WO 2021/099314

(56) Documents cités:
- EP-A1- 3 181 328
- US-A- 5 803 291
- US-A1- 2003 077 349
- US-B1- 6 464 486

## Description

### Domaine technique de l'invention

L'invention se rapporte au domaine des machines de fabrication de récipients en matériau thermoplastique.

L'invention se rapporte plus particulièrement aux machines de soufflage dans lesquelles on fabrique des récipients en matière plastique à partir d'une préforme préalablement obtenue par exemple par moulage par injection. De telles machines et procédés sont décrits dans les documents brevets US5803291A et EP3181328A1.

### Arrière-plan technique

Une telle machine comporte au moins une unité de moulage munie d'un moule de soufflage dans lequel une préforme est engagée de telle sorte qu'elle présente un col qui s'ouvre à l'extérieur du moule. L'unité de moulage comporte une tuyère de soufflage qui est mobile entre une position escamotée et une position de soufflage dans laquelle elle est maintenue en appui étanche contre le moule ou contre le col de la préforme pour introduire du fluide de soufflage sous pression dans la préforme.

Des machines de ce type sont couramment utilisées pour assurer la fabrication de récipients, tels que des bouteilles, à partir de préformes en polyéthylène téréphtalate (PET). Pour obtenir une bonne précision de la forme du récipient, surtout dans les zones de formes complexes, on est amené à utiliser des pressions de soufflage relativement importantes. Ainsi, lorsque le fluide de soufflage est de l'air, le soufflage est généralement réalisé sous une pression d'environ 40 bars. Cette forte pression permet d'étirer le matériau de la préforme, précédemment chauffée, pour le plaquer contre les parois qui forment l'empreinte du moule. Dans la plupart des machines, une tige d'étirage est introduite axialement à l'intérieur de la préforme pour venir en appui contre l'extrémité fermée du fond de la préforme en même temps que le fluide sous pression y est injecté. La tige d'étirage permet ainsi de commander au mieux la déformation axiale de la préforme au cours du soufflage du récipient.

Dans un tel procédé d'obtention d'un récipient, le col du récipient est formé directement à sa forme définitive dès le moulage par injection de la préforme. Ce col comporte généralement un filetage qui permettra le vissage du bouchon du récipient. Dans certains cas, il sera nécessaire de respecter une orientation angulaire particulière de la préforme par rapport au moule de soufflage autour de son axe principal.

Tel est le cas lorsque ni le corps du récipient que l'on veut former, ni le bouchon avec lequel on veut le refermer, ne sont des corps de révolution. Dans ce cas, on souhaite généralement que le bouchon, une fois complètement vissé sur le col du récipient, ait une orientation bien déterminée par rapport au corps, notamment pour des raisons esthétiques. Or, dans ce cas, c'est la disposition angulaire du filetage du col par rapport au corps du récipient qui déterminera la position finale du bouchon en fin de vissage.

Tel est aussi le cas lorsque le corps de la préforme a été chauffée de manière hétérogène selon un profil de chauffe dit "préférentiel" pour obtenir un récipient final non axisymétrique. Un tel procédé de chauffe de la préforme implique en effet de chauffer plus fortement les zones de la préforme qui doivent subir un étirement plus important que les zones moins chauffées.

Aussi, il est nécessaire de prévoir des moyens qui permettent d'orienter angulairement la préforme par rapport au moule de soufflage, puisque c'est ce dernier qui confère au corps du récipient sa forme définitive.

On a déjà proposé des procédés d'orientation de la préforme après son insertion dans le moule. Dans ces procédés existants, le col de la préforme comporte un repère en relief qui est susceptible d'être détecté par un capteur barrière optique qui émet un faisceau de détection. La préforme est entraînée en rotation autour de son axe principal jusqu'à ce que le capteur détecte le repère, notamment lorsque le repère coupe le faisceau du capteur barrière. La préforme est toujours tournée dans un seul et même sens lors de la recherche du repère, quelle que soit la position angulaire de la préforme lors de son installation dans le moule.

En outre, il peut être nécessaire de prévoir une étape de correction de la position angulaire en tournant la préforme dans l'autre sens pour prendre en compte le temps de réaction du capteur et ramener ainsi le récipient dans la bonne position angulaire.

Ces procédés ne sont pas satisfaisant car il peut arriver que la préforme doive faire un tour presque complet avant que le capteur ne détecte le repère. Or, lorsque la machine de soufflage est destinée à souffler des récipients en grandes séries avec un débit très important, par exemple supérieur à 80 000 récipients par heure, on doit pouvoir orienter le récipient très rapidement, quelle que soit sa position angulaire lors de son installation dans le moule. Les procédés d'orientation existants limitent donc le débit de production de la machine de soufflage.

### Résumé de l'invention

L'invention propose un procédé d'orientation d'une préforme axisymétrique d'axe, notamment d'une préforme en matériau thermoplastique, dans un moule de formage d'une machine de soufflage, un col de la préforme étant équipé d'au moins un repère permettant de déterminer la position angulaire de la préforme autour de son axe principal par rapport à une position angulaire de référence fixe par rapport au moule, le procédé comportant :
- une étape d'installation de la préforme dans une cavité du moule, le col dépassant à l'extérieur du moule ;
- puis une étape d'orientation de la préforme ainsi installée dans laquelle la préforme est automatiquement tournée autour de son axe par rapport au moule jusqu'à occuper la position angulaire de référence ;
caractérisé en ce qu'il comporte une étape (E2) intermédiaire comprenant une détection de la position angulaire actuelle de la préforme et une détermination d'un angle de rotation duquel la préforme doit être tournée pour atteindre sa position angulaire de référence, l'étape d'orientation étant enclenchée à l'issue de l'étape intermédiaire.

Selon une autre caractéristique du procédé réalisé selon les enseignements de l'invention, la détermination de l'angle de rotation comprend la détermination d'un angle (α) minimal et d'un sens de rotation associé dans lequel la préforme doit être tournée pour atteindre sa position angulaire de référence.

Selon une autre caractéristique du procédé réalisé selon les enseignements de l'invention la détection de la position angulaire actuelle de la préforme (14) comporte :
- une première phase de prise d'au moins une image du col de la préforme installée par au moins un dispositif de prise d'image qui est agencé à une position prédéterminée par rapport au moule lors de la prise d'image ;
- une deuxième phase de traitement de l'au moins une image pour détecter la position angulaire du repère par rapport à la position angulaire de référence ;

Selon une autre caractéristique du procédé selon les enseignements de l'invention, la machine de soufflage comprend une tuyère de soufflage comportant une cloche dans laquelle est agencé un organe d'entraînement en rotation de la préforme, la tuyère étant commandée en coulissement dans l'axe de la préforme installée dans le moule entre :
- une position extrême escamotée dans laquelle la tuyère est totalement écartée de la préforme et du moule ;
- une position intermédiaire d'indexation de la préforme dans laquelle l'organe d'entraînement de la préforme est en prise avec le col de la préforme, la cloche étant agencée à distance au-dessus du moule de manière à laisser au moins un tronçon de col comportant les repères apparent au dispositif de prise d'image ;
- une position extrême de soufflage dans laquelle la cloche est en contact avec le moule en englobant totalement le col de la préforme ;
la détection de la position angulaire actuelle de la préforme étant réalisée lorsque la tuyère occupe sa position intermédiaire d'indexation.

Selon une autre caractéristique du procédé selon les enseignements de l'invention, le col de la préforme comporte au moins deux repères, et en ce que lors de la première phase de prise d'image, une unique image du col est prise par un unique dispositif de prise d'image.

Selon une autre caractéristique du procédé selon l'invention, le col de la préforme comporte quatre repères répartis sur la circonférence du col.

Selon une autre caractéristique du procédé selon l'invention, l'unité de moulage est embarquée sur un carrousel qui tourne par rapport au sol, l'au moins un dispositif de prise d'image étant embarqué sur le carrousel et agencé de manière fixe par rapport au moule.

Selon une autre caractéristique du procédé selon l'invention, l'unité de moulage est embarquée sur un carrousel qui tourne par rapport au sol, l'au moins un dispositif de prise d'image étant fixe par rapport au sol de manière à prendre automatiquement l'image du col lors de la première phase de l'étape intermédiaire de détection lorsque le carrousel occupe une position angulaire déterminée par rapport au dispositif de prise d'image.

L'invention concerne aussi une machine de soufflage destinée à mettre en oeuvre le procédé réalisé selon les enseignements de l'invention. Une telle machine de soufflage comporte :
- un carrousel monté rotatif par rapport au sol autour d'un axe central ;
- au moins une unité de moulage qui est embarquée sur le carrousel le long d'une trajectoire circulaire, l'unité de moulage comportant :
   -- un moule comportant une cavité qui est ouverte dans une face supérieure du moule par un orifice de passage du col d'une préforme ;
   -- une tuyère de soufflage comportant une cloche dans laquelle est agencé un organe d'entraînement en rotation d'une préforme, la tuyère étant commandée en coulissement dans l'axe de l'orifice de passage entre :
      --- une position extrême supérieure escamotée lorsque l'unité de moulage est située sur un premier secteur de sa trajectoire et dans laquelle elle est totalement écartée du moule ;
      --- une position intermédiaire d'indexation lorsque l'unité de moulage est située sur un deuxième secteur de sa trajectoire et dans laquelle l'organe d'entraînement est destiné à être en prise avec le col d'une préforme installée dans le moule, la cloche étant agencée à distance au-dessus du moule ;
- une position extrême inférieure de soufflage lorsque l'unité de moulage est située sur un troisième secteur de sa trajectoire et dans laquelle la cloche est en contact avec le moule en englobant totalement l'orifice de passage ;
caractérisé en ce que la machine de soufflage comporte au moins un dispositif de prise d'image dont l'axe de prise de vue est orienté vers un point de mire déterminé de l'unité de moulage correspondant à l'endroit où est destiné à être agencé le col d'une préforme installée dans le moule lorsque l'unité de moulage est sur le deuxième secteur de sa trajectoire.

Selon d'autres caractéristiques de la machine de soufflage réalisée selon les enseignements de l'invention :
- l'au moins un dispositif de prise d'image est monté fixe par rapport au sol de manière que son axe de prise de vue soit orienté vers le point de mire déterminé lorsque l'unité de moulage occupe une position prédéterminée de sa trajectoire sur le deuxième secteur ;
- le carrousel embarque plusieurs unités de moulage, le point de mire déterminé de chacune des unités de moulage croisant l'axe de prise de vue de l'au moins un dispositif de prise d'image lorsqu'elles occupent, à tour de rôle, ladite position prédéterminée de leur trajectoire ;
- l'au moins un dispositif de prise d'image est fixé sur le carrousel de manière que son axe de prise de vue soit orienté en permanence vers le point de mire déterminé de l'unité de moulage associée.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[fig.1] La figure 1 est une vue en coupe axiale qui représente une unité de moulage réalisée selon les enseignements de l'invention et dans un moule de laquelle une préforme est installée, une tuyère occupant une position extrême escamotée ;
[fig.2] La figure 2 est une vue similaire à celle de la figure 1 dans laquelle la tuyère occupe une position intermédiaire d'orientation, un organe d'entraînement de la tuyère étant en prise avec la préforme pour permettre son entraînement en rotation ;
[fig.3] La figure 3 est une vue similaire à celle de la figure 1 qui représente la tuyère dans une position extrême de travail dans laquelle elle est apte à injecter un gaz de formage à l'intérieur de la préforme ;
[fig.4] La figure 4 est une vue en élévation qui représente un carrousel d'une machine de soufflage qui porte une pluralité d'unité de moulage réalisées selon les enseignements de l'invention, la machine de soufflage étant équipée d'un dispositif de prise d'image ;
[fig.5] La figure 5 est un schéma-bloc qui représente les différentes étapes et phases d'un procédé d'orientation de la préforme dans le moule de l'unité de moulage réalisé selon les enseignements de l'invention ;
[fig.6] La figure 6 est une vue de dessus qui représente le col d'une préforme lors de son passage en un point de mire visé par le dispositif de prise d'image, la préforme étant orientée selon une première orientation angulaire aléatoire ;
[fig.7] La figure 7 est une vue similaire à celle de la figure 6 qui représente la préforme orientée selon une deuxième orientation angulaire aléatoire ;
[fig.8] La figure 8 représente une image du col de la préforme de la figure 6 prise de côté par le dispositif de prise d'image de ladite figure 6 ;
[fig.9] La figure 9 représente une image du col de la préforme de la figure 7 prise de côté par le dispositif de prise d'image de ladite figure 7.

### Description détaillée de l'invention

Dans la suite de la description et dans les revendications, on adoptera à titre non limitatif une direction axiale orientée dans le sens de l'axe d'une préforme installée dans le moule. La direction axiale est utilisée à titre de repère géométrique sans rapport avec la direction de la gravité. On adoptera aussi le terme horizontal pour qualifier un plan orthogonal à la direction axiale. Le terme radial sera utilisé pour désigner des directions s'étendant horizontalement depuis l'axe de la préforme installée dans la préforme, depuis l'intérieur vers l'extérieur.

On notera que les termes "supérieur", "inférieur", "haute", "basse", (etc...) utilisés dans le texte se réfèrent à la configuration de l'unité de moulage tel qu'illustré sur les figures en rapport avec la direction axiale. Cependant, l'utilisation de ces termes ne doit pas être considérée comme une limitation à la portée de l'invention, laquelle trouvera aussi application avec d'autres orientations de l'unité de moulage.

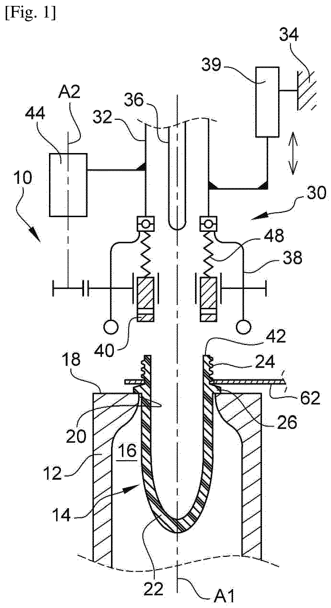

On a illustré sur la figure 1 une unité 10 de moulage pour une machine de soufflage de récipients à partir de préformes en matériau thermoplastique, tel que du PET. L'exemple illustré concerne une machine de soufflage de bouteilles.

L'unité 10 de moulage comporte de manière connue un moule 12 de soufflage qui est réalisé généralement en deux ou trois parties mobiles l'une par rapport à l'autre pour permettre d'introduire une préforme 14 dans une cavité 16 de moulage, formée à l'intérieur de ce moule 12, et pour permettre de retirer le récipient du moule après l'opération de soufflage. Lorsque les parties de moule sont assemblées, le moule 12 présente une face 18 supérieure globalement plane qui est traversée par un orifice 20 de passage d'axe "A1" d'orientation axiale qui débouche dans la cavité.

La préforme 14 se présente sous la forme d'un corps creux qui est obtenu par moulage par injection et qui présente généralement une forme axisymétrique d'axe "A1" principal. Un corps 22 de la préforme 14 présente une forme tubulaire fermée à une extrémité axiale, que l'on qualifiera arbitrairement d'inférieure, et elle est ouverte à son extrémité supérieure. Cette dernière, qui est destinée à former un col 24 de la préforme 14, est axisymétrique autour de l'axe "A1". La paroi cylindrique externe du col 24 est munie de moyens de fermeture par coopération avec un bouchon, par exemple un filetage externe. Lorsque la préforme 14 est installée dans le moule 12, seul le col 24 dépasse à l'extérieur du moule 12 à la faveur de l'orifice 20 de passage.

La préforme 14 présente, généralement à la base de son col 24, une collerette 26 qui prend appui sur la face 18 supérieure du moule 12 sur le pourtour de l'orifice 20 de passage. Ainsi, l'unité 10 de moulage est configurée de telle sorte que le col 24 de la préforme 14 dépasse au-dessus de la face 18 supérieure du moule 12.

Par la suite, et sauf indication contraire, on fera toujours référence à la préforme 14 dans cette position installée dans le moule 12.

Pour les besoins de l'invention, le col 24 de la préforme 14 est muni d'au moins un repère 28A, 28B, 28C, 28D permettant de déterminer la position angulaire de la préforme 14 autour de son axe "A1" principal par rapport à une position angulaire de référence fixe par rapport au moule 12. Cela permet de mettre en oeuvre un procédé d'orientation de la préforme 14 par rapport au moule 12 comme cela sera expliqué par la suite.

Il s'agit de repère 28A, 28B, 28C, 28D visuels qui sont susceptibles d'apparaître sur une image prise par un dispositif de prise d'image lorsqu'ils sont éclairés en lumière du spectre visible et/ou lorsqu'ils sont éclairés par une lumière de spectre déterminé, qui peut être invisible à l'oeil nu.

Le col 24 de la préforme 14 comporte avantageusement au moins deux repères agencés symétriquement par rapport à l'axe "A1". Ainsi, lorsqu'on regarde le col 24 de côté, au moins un repère sera toujours visible. Dans l'exemple représenté aux figures, la préforme 14 comporte quatre repères 28A, 28B, 28C, 28D visuels qui sont répartis régulièrement sur la circonférence du col 24, à 90° les uns par rapport aux autres autour de l'axe "A1" principal de la préforme 14.

Les repères 28A, 28B, 28C, 28D sont avantageusement différents les uns des autres de manière à permettre de déterminer une unique position angulaire de la préforme 14 en visualisant un seul de ces repères.

Les repères 28A, 28B, 28C, 28D visuels sont par exemple des marques ajoutées sur la préforme 14. Les marques sont par exemple réalisées par transformation de la matière, notamment au moyen d'un laser sur le col 24 de la préforme 14. Les marques peuvent aussi être réalisées par dépose d'une encre, par exemple par impression.

En variante il s'agit de repères en relief réalisés directement dans la matière de la préforme 14 tels que des encoches et/ou des ergots, ou encore le filetage du col 24 luimême.

Les repères 28A, 28B, 28C, 28D sont peuvent être réalisés sur la collerette 26 et/ou sur une face axiale cylindrique externe du col 24.

L'unité 10 de moulage comporte aussi une tuyère 30 de soufflage qui est agencée axialement au-dessus du moule 12, et qui est destinée à être commandé en coulissement vers le bas dans l'axe "A1" de l'orifice 20 de passage en regard du col 24 de la préforme 14 pour y injecter de l'air sous pression et ainsi forcer le matériau du corps de la préforme 14 à se déformer et à épouser la forme de la cavité 16 du moule 12.

Selon une conception connue des machines de soufflage, la tuyère 30 de soufflage comporte pour l'essentiel un corps 32 de tuyère tubulaire qui est mobile axialement dans un bloc 34 porte-tuyère fixe de l'unité 10 de moulage. Le corps 32 de tuyère est traversé selon l'axe "A1" par une tige 36 d'étirage qui est commandée axialement par un vérin, un moteur électrique ou un dispositif came/galet (non représentés) pour s'engager dans la préforme 14 et guider la déformation axiale de celle-ci au cours du soufflage.

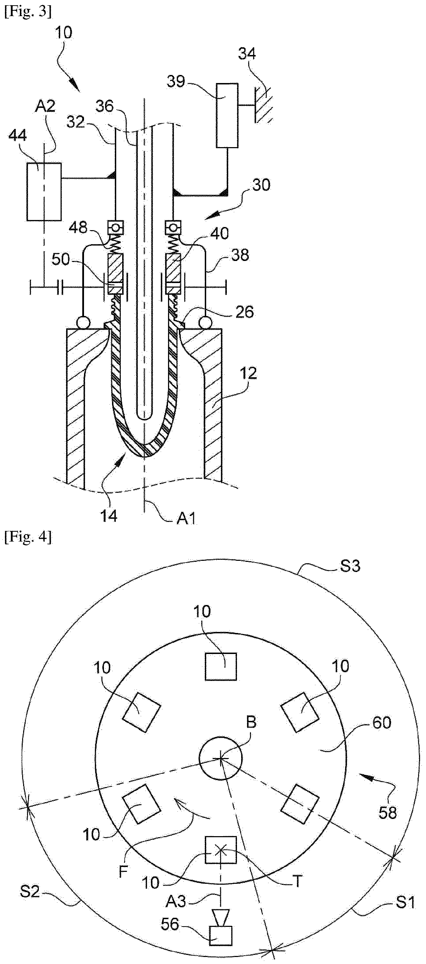

Dans l'exemple illustré, l'unité 10 de moulage est équipée d'une tuyère cloche comparable à celle décrite dans le brevet français FR-2.764.544. Ainsi, le corps 32 de tuyère est muni à son extrémité inférieure d'une pièce en forme de cloche 38 qui est ouverte à son extrémité inférieure pour venir en appui étanche sur la face 18 supérieure du moule 12, autour du col 24 de la préforme 14, comme représenté à la figure 3, et non pas en appui sur ce dernier. Une fois la cloche 38 en appui sur le moule 12, la tuyère 30 se trouve en communication étanche avec l'intérieur de la préforme 14 pour y injecter du gaz sous pression.

En variante non représentée, l'extrémité inférieure de la tuyère 30 vient en contact étanche avec le col 24 de la préforme 14 pour injecter du gaz sous pression.

Le corps 32 de tuyère, et donc la cloche 38, peuvent être positionnés axialement entre deux positions extrêmes.

A la figure 1, la tuyère 30 se trouve dans une première position extrême, dite "position extrême escamotée", dans laquelle elle permet le chargement de la préforme 14 dans le moule 12, puis le déchargement du récipient une fois formé. Dans cette position extrême escamotée, la cloche 38 est écartée axialement au-dessus de la face 18 supérieure du moule 12.

A la figure 3, la tuyère 30 est illustrée dans une deuxième position extrême, dite "position extrême de travail", dans laquelle la cloche 38 est en appui étanche sur la face 18 supérieure du moule 12 en englobant l'orifice 20 de passage et le col 24.

Les déplacements de la tuyère 30 entre ses deux positions extrêmes peuvent être commandés de différentes façons. Le coulissement de la tuyère 30 est avantageusement commandé au moyen d'un moteur 39 électrique linéaire. Le moteur 39 électrique linéaire est par exemple fixé au bloc 34 porte-tuyère.

En variante non représentée de l'invention, le coulissement de la tuyère 30 est commandé à l'aide d'un système de vérin pneumatique étagé.

L'unité 10 de moulage comporte aussi un organe 40 d'entraînement pour orienter la préforme 14 autour de l'axe "A1" après qu'elle a été introduite dans le moule 12. L'organe 40 d'entraînement est destiné à venir en prise, par exemple par friction, avec la préforme 14 pour permettre l'entraînement sans glissement de la préforme 14 en rotation. L'organe 40 d'entraînement présente ici une forme tubulaire d'axe "A1".

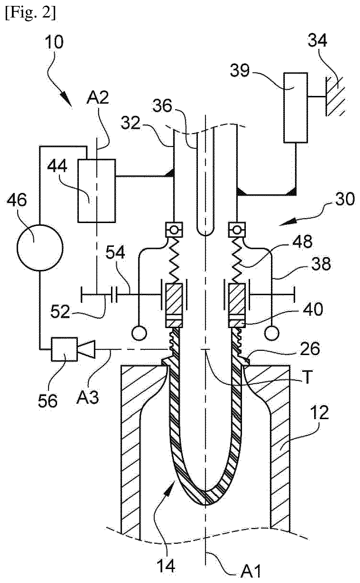

A titre d'exemple non limitatif, l'organe 40 d'entraînement forme un organe de stabilisation qui permet de maintenir la préforme 14 fermement en position installée dans le moule 12 pendant l'opération de formage, notamment lorsque du gaz de soufflage sous pression est introduit dans la préforme 14. L'organe 40 d'entraînement est écarté axialement de la préforme 14 lorsque la tuyère 30 occupe sa position extrême escamotée. L'organe 40 d'entraînement est destiné à venir au contact de la préforme 14 installée lorsque le corps 32 de tuyère est déplacé axialement de sa position extrême escamotée jusqu'à une position intermédiaire entre ses deux positions extrêmes, dite position intermédiaire d'orientation, qui est illustrée à la figure 2, dans laquelle la cloche 38 est rapprochée de la face 18 supérieure du moule 12 sans venir en contact avec la face 18 supérieure du moule 12. De cette manière au moins un tronçon inférieur du col 24 de la préforme 14 demeure visible depuis l'extérieur.

Dans l'exemple de réalisation représenté sur les figures, l'organe 40 d'entraînement est destiné à être appuyé axialement contre un bord 42 supérieur circulaire libre, dit buvant, du col 24 de la préforme 14. Lorsque l'organe 40 d'entraînement est entraîné en rotation, il entraîne la préforme 14 par friction. Un effort "E" axial de serrage de l'organe 40 d'entraînement contre la préforme 14 permet de garantir l'adhérence nécessaire à l'entraînement en rotation de la préforme 14. Lorsque le coulissement de la tuyère 30 est commandé par le moteur 39 linéaire, cet effort "E" axial de serrage est avantageusement maîtrisé de manière suffisante pour éviter le glissement de l'organe 40 d'entraînement par rapport à la préforme 14, tout en permettant un glissement de la collerette 26 de la préforme 14 sur la face 18 supérieure du moule 12.

En variante non représentée de l'invention, l'organe 40 d'entraînement est prévu pour être engagé en frottement avec la préforme 14 par l'intérieur du col 24. Un jonc élastique est alors agencé autour de l'organe 40 d'entraînement. Le jonc élastique est destiné à être comprimé radialement lorsque l'organe 40 d'entraînement est engagée axialement dans le col 24 de la préforme 14 afin d'assurer le maintien de la préforme 14 sur l'organe 40 d'entraînement par frottement.

Selon une autre variante non représentée de l'invention, l'organe 40 d'entraînement saisit le col 24 de la préforme 14 par l'extérieur, notamment dans le cas de préformes 14 présentant un col 24 de plus petit diamètre.

Quel que soit le mode de réalisation de l'organe 40 d'entraînement, au moment de sa mise en contact avec le col 24 de la préforme 14, on profite avantageusement de la présence de la collerette 26 radiale externe qui est agencée à la base du col 24 et qui permet à la préforme 14 de s'appuyer sur la face supérieure du moule 12.

L'organe 40 d'entraînement est monté tournant autour de l'axe "A1" par rapport au moule 12 de manière à pouvoir entraîner la préforme 14 en rotation autour de son axe "A1" lorsqu'il est en prise avec le col 24 de la préforme 14. L'organe 40 d'entraînement est susceptible d'être entraîné en rotation dans les deux sens de manière commandée par un moyen motorisé d'entraînement en rotation, par exemple un moteur 44 électrique. Le moteur 44 électrique est commandé automatiquement par une unité 46 électronique de commande, comme cela est illustré à la figure 2.

De manière non limitative, dans l'exemple représenté aux figures, l'organe 40 d'entraînement est solidaire de la cloche 38 en rotation autour de l'axe "A1" laquelle peut tourner autour de cet axe "A1" par rapport au corps 32 de tuyère à l'extrémité inférieure duquel elle est fixée. En revanche, la cloche 38 est solidaire axialement du corps 32 de tuyère. L'organe 40 d'entraînement peut coulisser axialement par rapport à cet ensemble lorsque la tuyère 30 se déplace de sa position intermédiaire d'orientation vers sa position extrême de travail.

Par exemple, l'organe 40 d'entraînement est guidé en coulissement dans la cloche 38 par des cannelures internes de la cloche 38 qui garantissent aussi la solidarisation en rotation autour de l'axe "A1" de la cloche 38 et de l'organe 40 d'entraînement.

Une telle tuyère 30 rotative est bien connue de l'état de la technique et elle ne sera pas décrite plus en détails par la suite. On pourra se reporter au contenu du document EP 1 261 471 B1 pour un exemple détaillé d'une telle tuyère 30.

Comme on peut le voir sur les figures, la liberté de coulissement de l'organe 40 d'entraînement n'est pas totale. En effet, celui-ci est sollicité vers le bas par l'extrémité inférieure d'un ressort 48 de compression qui s'étend axialement à l'intérieur de la cloche 38, et dont l'extrémité supérieure est en appui contre une surface de réaction solidaire axialement de la cloche 38. L'effort axial exercé par le ressort 48 sur l'organe 40 d'entraînement doit être supérieur à l'effort "E" axial de serrage de l'organe 40 d'entraînement contre la préforme 14 permettant l'entraînement en rotation sans glissement de la préforme 14.

Lorsque le corps 32 de tuyère est commandé vers sa position extrême de travail, illustrée à la figure 3, dans laquelle la cloche 38 vient se plaquer de manière étanche sur la face supérieure du moule 12, l'organe 40 d'entraînement ne descend pas plus avant car il est en appui sur la préforme 14, laquelle est à son tour en appui sur le moule 12. Aussi, la possibilité de coulissement relatif de l'organe 40 d'entraînement et de la cloche 38 est nécessaire pour permettre à la tuyère 30 d'atteindre sa position extrême de travail, le ressort 48 se trouvant alors comprimé entre l'organe 40 d'entraînement, qui reste fixe et le corps 32 de tuyère qui descend.

Dans cette position extrême de travail, on peut voir que la tige 36 d'étirage est susceptible de traverser axialement l'organe 40 d'entraînement à la faveur d'un orifice central de l'organe 40 d'entraînement pour pénétrer à l'intérieur de la préforme 14, tout en laissant subsister un espace radial suffisant entre la tige 36 et la paroi interne de l'organe 40 d'entraînement pour que l'air sous pression puisse être injecté dans la préforme 14. On remarque aussi que des évents 50 sont prévus dans l'organe 40 d'entraînement pour permettre de conserver à tout moment une pression égale dans la tuyère 30, dans le récipient en cours de formation, et dans l'espace délimité par la cloche 38 au-dessus du moule 12, ceci afin d'éviter que le col 24 de la préforme 14 ne soit soumis à un différentiel de pression susceptible de le déformer. On remarquera que, lorsque la tuyère 30 est en position extrême de travail, la cloche 38 est en appui sur le moule 12 et ne peut donc pas tourner autour de l'axe "A1" ce qui bloque aussi toute rotation de l'organe 40 d'entraînement. Ce dernier bloque alors à son tour toute rotation de la préforme 14, du simple fait de l'adhérence induite par l'effort axial qu'applique le ressort 48 qui est comprimé.

Au contraire, lorsque la tuyère 30 est dans sa position intermédiaire d'orientation illustrée à la figure 2, elle est susceptible d'être entraînée en rotation par le dispositif d'entraînement. Ce dispositif d'entraînement comporte pour l'essentiel le moteur 44 électrique (ainsi que son module de commande) qui commande la rotation d'un pignon 52 d'engrenage d'axe "A2" parallèle à l'axe "A1". Le moteur 44 électrique est ici monté solidaire avec le corps 32 de la tuyère.

La cloche 38 comporte une roue 54 dentée externe qui engrène avec le pignon 52, de telle sorte que le moteur 44 peut faire tourner la cloche 38, et par son intermédiaire, l'organe 40 d'entraînement. De préférence, le pignon 52 présente une longueur axiale telle que le pignon 52 et la roue 54 restent toujours engrenés l'un avec l'autre, quelle que soit la position axiale de la cloche 38. En effet, bien que la liaison en rotation ne soit véritablement indispensable que lorsque la tuyère 30 est en position intermédiaire d'orientation, cette disposition permet d'éviter tout problème de ré-engrènement.

Comme on peut le voir sur les figures, l'unité 10 de moulage selon l'invention comporte encore au moins un dispositif 56 de prise d'image du col 24 de la préforme 14, tel qu'une caméra ou un appareil photo à capteur numérique. Dans l'exemple choisi, ce dispositif 56 de prise d'image est susceptible de prendre une image sur laquelle les repères 28A, 28B, 28C, 28D aménagés sur le col 24 de la préforme 14 sont susceptibles d'apparaître s'ils sont dans son champs de vision. On pourra aussi prévoir des moyens (non représentés) d'éclairage du col 24 pour garantir une image nette du col 24 lors de la prise d'image. Les moyens d'éclairage sont par exemple intégrés au dispositif 56 de prise d'image.

Comme cela est illustré à la figure 4, de telles unités 10 de moulage identiques équipent une machine 58 de soufflage de récipients en grande série et à grand débit. Les unités 10 de moulage sont embarquées sur un carrousel 60 qui est monté rotatif par rapport au sol autour d'un axe "B" central parallèle à l'axe "A1" dans le sens indiqué par la flèche "F", ici dans le sens horaire. Les unités 10 de moulage sont agencées sur une trajectoire circulaire commune centrée sur ledit axe "B" central.

De manière générale, la trajectoire circulaire des unités 10 de moulage est divisée en trois secteurs distincts. Sur un premier secteur "S1", dit de déchargement et de chargement, la tuyère 30 est commandée dans sa position extrême escamotée pour permettre d'introduire une préforme 14 dans le moule 12, par exemple la préforme 14 est amenée au moyen d'une pince 62 comme cela est illustré à la figure 1.

Puis sur un deuxième secteur "S2" agencé directement en aval du premier secteur "S1", la tuyère 30 est commandée dans sa position intermédiaire d'orientation. La pince 62 est alors retirée.

Enfin, sur un troisième secteur "S3" de soufflage, la tuyère 30 occupe sa position extrême de travail pour permettre le formage de la préforme 14 en récipient final. A l'issue du troisième secteur "S3", l'unité 10 de moulage revient directement dans le premier secteur "S1" dans lequel la tuyère 30 est commandée dans sa position extrême escamotée pour permettre l'extraction du récipient fini et l'insertion d'une nouvelle préforme 14 pour entamer un nouveau cycle de formage.

Le procédé d'orientation de la préforme 14 dans une unité 10 de moulage déterminée est mis en oeuvre lorsque ladite unité 10 de moulage est sur le deuxième secteur "S2" de sa trajectoire. Lorsque la machine 58 de soufflage est destinée à former des récipients en grandes séries, chaque unité 10 de moulage parcourt le deuxième secteur "S2" de la trajectoire en un temps très court, très inférieur à 1 seconde. Par exemple, dès son entrée dans le deuxième secteur "S2", la tuyère 30 met 100 millisecondes à descendre depuis sa position extrême escamotée jusqu'à sa position intermédiaire d'orientation. Puis la tuyère 30 demeure en position intermédiaire d'orientation pendant environ 75 millisecondes avant que l'unité 10 de formage n'entre dans le troisième secteur "S3" de sa trajectoire dans lequel la tuyère 30 est commandée vers sa position extrême de travail. Ainsi, dans une telle configuration, l'orientation de la préforme 14 par rapport au moule 12 doit être effectuée pendant que la tuyère 30 occupe effectivement sa position intermédiaire d'orientation, à savoir une durée d'environ 75 millisecondes.

L'invention propose un procédé permettant de réaliser l'orientation de la préforme 14 en un temps inférieur à cette durée.

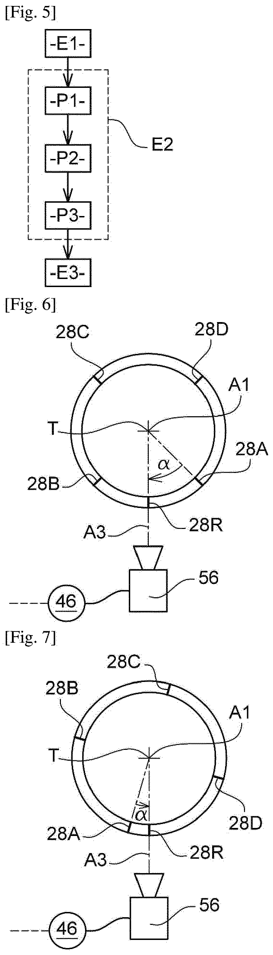

Comme cela est illustré à la figure 5, le procédé comporte principalement :
- une étape "E1" d'installation de la préforme 14 dans la cavité 16 du moule 12, le col 24 dépassant à l'extérieur du moule 12, comme cela a déjà été expliqué ;
- puis une étape "E2" intermédiaire de détection de la position angulaire actuelle par rapport au moule 12 afin de déterminer un angle "α" minimal de rotation et le sens de rotation associé dans lequel la préforme 14 doit être tournée autour de son axe "A1" pour atteindre sa position de référence ;
- et enfin, une étape "E3" d'orientation de la préforme 14 ainsi installée dans laquelle la préforme 14 est automatiquement tournée dudit angle "α" de rotation et dans ledit sens autour de son axe "A1" par rapport au moule 12 pour occuper la position angulaire de référence.

La deuxième étape "E2" permet notamment de déterminer le sens dans lequel doit être tournée la préforme 14 pour atteindre au plus vite sa position de référence. En effet, pour faire correspondre la position d'un repère 28A avec un point 28R de référence, il est possible de tourner la préforme 14 dans un sens ou dans l'autre autour de son axe "A1". Cependant, dans un sens l'angle de rotation sera moins grand que dans l'autre sens. Par exemple, en se reportant à la figure 6, on constate qu'en tournant la préforme 14 dans un sens horaire de l'angle "α", il sera possible de l'amener au point 28R de référence beaucoup plus rapidement qu'en tournant la préforme 14 dans un sens antihoraire de l'angle "360°-α". De même, à la figure 7, on remarquera que pour faire amener le repère 28A au point 28R de référence, il suffit de faire tourner la préforme 14 dans un sens horaire de l'angle "α". En faisant tourner la préforme 14 dans un sens adapté, l'angle "α" minimal de rotation de la préforme sera ainsi toujours inférieur ou égal à 180°.

L'étape "E2" intermédiaire de détection est réalisée lorsque la tuyère 30 occupe sa position intermédiaire d'orientation.

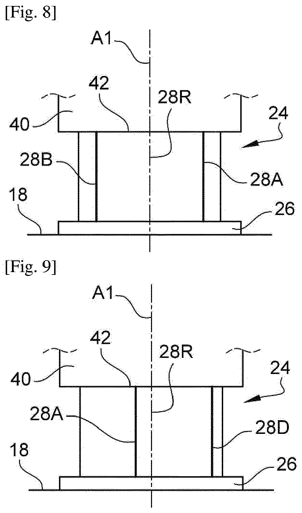

L'étape "E2" de détection comporte une première phase "P1" de prise d'au moins une image du col 24 de la préforme 14 installée par le dispositif 56 de prise d'image qui est agencé à une position prédéterminée par rapport au moule 12 lors de la prise d'image. De telles images sont par exemple illustrées aux figures 8 et 9.

Le champ de vision du dispositif 56 de prise d'image se présente globalement sous la forme d'un cône d'axe "A3" principal appelé axe "A3" de prise de vue. Comme représenté à la figure 2, le dispositif 56 de prise d'image est agencé de manière que, au moment d'une prise d'image, son axe "A3" de prise de vue soit orienté vers le col 24 de manière à prendre une image faisant apparaître la face externe d'un côté du col 24 lorsque la tuyère 30 occupe sa position intermédiaire d'orientation. Dans l'exemple représenté à la figure 2, l'axe "A3" de prise de vue est agencé globalement radialement par rapport à l'axe "A1" de la préforme 14, au même niveau que le col 24.

Le dispositif 56 de prise d'image est agencé à l'extérieur de la cloche 38. Ainsi, lorsque la tuyère 30 occupe sa position extrême de travail, comme représentée à la figure 3, la cloche 38 masque entièrement le col 24. Cependant, dans sa position intermédiaire d'orientation, la cloche 38 est agencée à distance au-dessus du moule 12 de manière à laisser au moins le tronçon de col 24 comportant les repères 28A, 28B, 28C, 28D apparent par rapport au dispositif 56 de prise d'image.

Selon le mode de réalisation représenté à la figure 4, le dispositif 56 de prise d'image est monté fixe par rapport au sol et son axe "A3" de prise de vue est orienté vers un point "T" de mire déterminé, fixe par rapport au sol, du deuxième secteur "S2" de la trajectoire des unités 10 de moulage. Le point "T" de mire correspond à l'endroit où se situe le col 24 d'une préforme 14 installée dans un moule 12 lorsque l'unité 10 de moulage passe à une position prédéterminée de la trajectoire. La position prédéterminée est définie comme étant la position à laquelle la tuyère 30 de l'unité 10 de moulage vient juste d'atteindre sa position intermédiaire d'orientation depuis sa position extrême escamotée.

Ainsi, le dispositif 56 de prise d'image est apte à prendre automatiquement "à la volée" l'image du col 24 lorsque chaque unité 10 de moulage passe au point "T" de mire, dans l'axe "A3" de prise de vue du dispositif 56 de prise d'image, le carrousel 60 occupant alors une position angulaire déterminée autour de son axe "B" par rapport au dispositif 56 de prise d'image. Ainsi, un unique dispositif 56 de prise d'image est suffisant pour prendre une image des col 24 équipant chacune des unités 10 de moulage, chacune des unités 10 de moulage croisant l'axe "A3" de prise de vue du dispositif 56 de prise d'image lorsqu'elles occupent, à tour de rôle, ladite position prédéterminée de leur trajectoire.

Dans l'exemple représenté aux figures, la préforme 14 comporte quatre repères 28A, 28B, 28C, 28D visuels qui sont agencés régulièrement sur la circonférence du col 24, à 90° les uns par rapport aux autres autour de l'axe "A1" principal de la préforme 14. De préférence le col 24 comporte au moins deux repères de manière qu'au moins un repère soit toujours apparent sur l'image du col 24 prise par le dispositif 56 de prise d'image. Ainsi, dans l'exemple représenté, une unique image du col 24 est prise par un unique dispositif 56 de prise d'image pendant la première phase "P1".

En variante, plusieurs dispositifs 56 de prise d'image sont montés fixes par rapport au sol. Les axes "A3" de prise de vue de chacun des dispositifs 56 de prise d'image sont orientés vers l'axe "A1" d'une préforme installée dans une unité 10 de moulage passant audit point "T" de mire. Ceci permet à chacun des dispositifs 56 de prise d'image de prendre simultanément le même col 24 sous des angles différents. Ainsi, lorsque les dispositifs 56 de prise d'image sont disposés de manière à couvrir ensemble la totalité de la face cylindrique externe du col 24, le col 24 peut n'être équipé que d'un seul repère.

Selon une autre variante non représentée de l'invention, le dispositif de prise d'image est embarqué sur le carrousel et agencé de manière fixe par rapport au moule. Ainsi, chaque unité de moulage comporte un dispositif de prise d'image associé dont l'axe "A3" de prise de vue est orienté en permanence vers le point "T" de mire de l'unité de moulage associée.

Le dispositif 56 de prise d'image est susceptible de communiquer l'image capturée du col 24 à l'unité 46 électronique de commande, par exemple par une liaison filaire ou par un signal électromagnétique adapté.

Lors d'une deuxième phase "P2" de traitement de la deuxième étape "E2" de détection, l'image prise par le ou les dispositifs 56 de prise d'image est traitée informatiquement pour détecter la position angulaire d'un repère 28A, 28B, 28C, 28D visible sur l'image par rapport à la position angulaire de référence. A cet effet, l'unité 46 électronique de commande est munie d'un logiciel de traitement d'image qui permet d'identifier le ou les repères 28A, 28B, 28C, 28D apparaissant sur l'image.

Une fois la position des repères 28A, 28B, 28C, 28D étant identifiée sur l'image, une troisième phase "P3" est enclenchée au cours de laquelle l'angle "α" de rotation de la préforme 14 pour atteindre sa position de référence lors l'étape d'orientation est déterminé par l'unité 46 électronique de commande.

Comme cela est illustré aux figure 8 et 9, la position du dispositif 56 de prise d'image étant fixe, l'endroit, dit "point 28R de référence", où devrait se situer le ou les repère 28A, 28B, 28C, 28D sur l'image pour que la préforme 14 occupe sa position angulaire de référence est invariable. Ce point 28R de référence est déterminé avant la mise en oeuvre du procédé. L'unité 46 électronique de commande calcule l'angle "α" de rotation en fonction de la distance transversale entre ce point 28R de référence et la position actuelle du repère 28A, 28B, 28C, 28D identifié sur l'image. En fonction de la position actuelle du repère 28A, 28B, 28C, 28D par rapport au point 28R de référence, à droite ou à gauche comme illustré aux figures, l'unité 46 électronique détermine aussi le sens de rotation dans lequel doit être tournée la préforme 14 pour atteindre au plus vite sa position de référence.

La totalité de cette deuxième étape "E2" est par exemple réalisée en 6 millisecondes.

Lors de la troisième étape "E3", l'unité 46 électronique de commande utilise ces deux paramètres, sens de rotation et angle "α" de rotation pour commander le moteur 44 afin d'entraîner la préforme 14 en rotation jusqu'à sa position angulaire de référence. La réalisation de cette étape est réalisée en moins de 70 millisecondes car la préforme 14 sera tournée d'un angle inférieur ou égal à 180° grâce au procédé permettant de déterminer le sens de rotation préalablement à la mise en rotation de la préforme 14.

Lors de la mise en oeuvre du procédé, une préforme 14 est tout d'abord installée par une pince 62 dans le moule 12 lors de la première étape "E1", pendant que l'unité 10 de moulage parcourt le premier secteur "S1" de sa trajectoire circulaire. La tuyère 30 occupe alors sa position extrême escamotée.

Puis, lorsque ladite unité 10 de moulage entre dans le deuxième secteur "S2" de sa trajectoire, après que la tuyère 30 ait été commandée dans sa position intermédiaire et après que la pince 62 ait été retirée, la première phase "P1" de la deuxième étape "E2" de détection est déclenchée. Lorsque le col 24 de la préforme passe par le point "T" de mire, le dispositif 56 de prise d'image prend une image de côté du col 24.

Cette image est analysée par l'unité 46 électronique de commande lors de la deuxième phase "P2". L'unité 46 électronique de commande en déduit alors l'angle "α" de rotation et le sens de rotation de la préforme 14 pour atteindre sa position angulaire de référence dans le moule 12.

Puis, au cours de la troisième étape "E3" d'orientation, le moteur 44 électrique est commandé par l'unité 46 électronique de commande pour faire tourner la préforme 14 dans ledit sens et dudit angle "α" de rotation pour amener celle-ci dans sa position angulaire de référence.

Pendant toute la durée du procédé, le carrousel poursuit sans interruption sa rotation, de sorte que l'unité 10 de moulage continue à parcourir le deuxième secteur "S2" de sa trajectoire.

A l'issue du procédé, la préforme 14 termine de parcourir le deuxième secteur "S2" de sa trajectoire, puis elle pénètre dans le troisième secteur "S3" angulaire dans lequel la tuyère 30 est commandée vers sa position extrême de travail, bloquant ainsi la préforme 14 dans sa position angulaire de référence pendant toute la durée de son formage.

L'invention permet avantageusement d'orienter très rapidement la préforme 14, en définissant notamment le sens de rotation qui permet d'atteindre le plus rapidement sa position angulaire de référence avant de procéder à son orientation.

## Revendications

1. Procédé d'orientation d'une préforme (14) axisymétrique d'axe (A1), notamment d'une préforme en matériau thermoplastique, dans un moule (12) de formage d'une machine (58) de soufflage, un col (24) de la préforme (14) étant équipé d'au moins un repère (28A, 28B, 28C, 28D) permettant de déterminer la position angulaire de la préforme (14) autour de son axe (A1) principal par rapport à une position angulaire de référence fixe par rapport au moule (12), le procédé comportant :
- une étape (E1) d'installation de la préforme (14) dans une cavité (16) du moule (12), le col (24) dépassant à l'extérieur du moule (12) ;
- puis une étape (E3) d'orientation de la préforme (14) ainsi installée dans laquelle la préforme (14) est automatiquement tournée autour de son axe (A1) par rapport au moule (12) jusqu'à occuper la position angulaire de référence ;
**caractérisé en ce qu'**il comporte une étape (E2) intermédiaire comprenant une détection de la position angulaire actuelle de la préforme (14) et une détermination d'un angle de rotation duquel la préforme (14) doit être tournée pour atteindre sa position angulaire de référence, l'étape (E3) d'orientation étant enclenchée à l'issue de l'étape (E2) intermédiaire.

2. Procédé selon la revendication précédente, **caractérisé en ce que** la détermination de l'angle de rotation comprend la détermination d'un angle (α) minimal et d'un sens de rotation associé dans lequel la préforme (14) doit être tournée pour atteindre sa position angulaire de référence.

3. Procédé selon la revendication précédente, **caractérisé en ce que** la détection de la position angulaire actuelle de la préforme (14)
comporte :
- une première phase (P1) de prise d'au moins une image du col (24) de la préforme (14) installée par au moins un dispositif (56) de prise d'image qui est agencé à une position prédéterminée par rapport au moule (12) lors de la prise d'image ;
- une deuxième phase (P2) de traitement de l'au moins une image pour détecter la position angulaire du repère (28A, 28B, 28C, 28D) par rapport à la position angulaire de référence.

4. Procédé selon la revendication précédente, **caractérisé en ce que** la machine (58) de soufflage comprend une tuyère (30) de soufflage comportant une cloche (38) dans laquelle est agencé un organe (40) d'entraînement en rotation de la préforme (14), la tuyère (30) étant commandée en coulissement dans l'axe de la préforme (14) installée dans le moule entre :
- une position extrême escamotée dans laquelle la tuyère (30) est totalement écartée de la préforme (14) et du moule (12) ;
- une position intermédiaire d'indexation de la préforme (14) dans laquelle l'organe (40) d'entraînement de la préforme (14) est en prise avec le col (24) de la préforme (14), la cloche (38) étant agencée à distance au-dessus du moule (12) de manière à laisser au moins un tronçon de col comportant les repères (28A, 28B, 28C, 28D) apparent au dispositif (56) de prise d'image ;
- une position extrême de soufflage dans laquelle la cloche (38) est en contact avec le moule (12) en englobant totalement le col (24) de la préforme (14) ;
la détection de la position angulaire actuelle de la préforme (14) étant réalisée lorsque la tuyère (30) occupe la position intermédiaire d'indexation.

5. Procédé selon l'une quelconque des revendications précédentes, **caractérisé en ce que** le col (24) de la préforme (14) comporte au moins deux repères (28A, 28B, 28C, 28D), et **en ce que** lors de la première phase (P1) de prise d'image, une unique image du col (24) est prise par un unique dispositif (56) de prise d'image.

6. Procédé selon la revendication précédente, **caractérisé en ce que** le col (24) de la préforme (14) comporte quatre repères (28A, 28B, 28C, 28D) répartis sur la circonférence du col (24).

7. Procédé selon l'une quelconque des revendications précédentes, **caractérisé en ce que** l'unité (10) de moulage est embarquée sur un carrousel (60) qui tourne par rapport au sol, l'au moins un dispositif (56) de prise d'image étant embarqué sur le carrousel (60) et agencé de manière fixe par rapport au moule (12).

8. Procédé selon l'une quelconque des revendications 1 à 6, **caractérisé en ce que** l'unité (10) de moulage est embarquée sur un carrousel (60) qui tourne par rapport au sol, l'au moins un dispositif (56) de prise d'image étant fixe par rapport au sol de manière à prendre automatiquement l'image du col (24) lors de la première phase (P1) de l'étape (E2) intermédiaire de détection lorsque le carrousel (60) occupe une position angulaire déterminée par rapport au dispositif (56) de prise d'image.

9. Machine (58) de soufflage pour la mise en oeuvre du procédé selon l'une quelconque des revendications précédentes, **caractérisée en ce qu'**elle comporte :
- un carrousel (60);
- au moins une unité (10) de moulage qui est embarqué sur le carrousel (60) le long d'une trajectoire, l'unité (10) de moulage comportant :
-- un moule (12) comportant une cavité (16) qui est ouverte dans une face (18) supérieure du moule (12) par un orifice (20) de passage du col (24) d'une préforme (14) ;
-- une tuyère (30) de soufflage comportant une cloche (38) dans laquelle est agencé un organe (40) d'entraînement en rotation d'une préforme (14), la tuyère (30) étant commandée en coulissement le long d'un axe (A1) de l'orifice (20) de passage entre :
--- une position extrême supérieure escamotée lorsque l'unité (10) de moulage est située sur un premier secteur (S1) de sa trajectoire et dans laquelle elle est totalement écartée du moule (12) ;
--- une position intermédiaire d'indexation lorsque l'unité (10) de moulage est située sur un deuxième secteur (S2) de sa trajectoire et dans laquelle l'organe (40) d'entraînement est destiné à être en prise avec le col (24) d'une préforme (14) installée dans le moule (12), la cloche (38) étant agencée à distance au-dessus du moule (12) ;
- une position extrême inférieure de soufflage lorsque l'unité (10) de moulage est située sur un troisième secteur (S3) de sa trajectoire et dans laquelle la cloche (38) est en contact avec le moule (12) en englobant totalement l'orifice (20) de passage ;
**caractérisé en ce que** la machine (58) de soufflage comporte au moins un dispositif (56) de prise d'image dont un axe (A3) de prise de vue est orienté vers un point (T) de mire déterminé de l'unité (10) de moulage correspondant à l'endroit où est destiné à être agencé le col (24) d'une préforme (14) installée dans le moule (12) lorsque l'unité (10) de moulage est sur le deuxième secteur (S2) de sa trajectoire.

10. Machine (58) selon la revendication précédente, **caractérisée en ce que** l'au moins un dispositif (56) de prise d'image est monté fixe par rapport au sol de manière que son axe (A3) de prise de vue soit orienté vers le point (T) de mire déterminé lorsque l'unité (10) de moulage occupe une position prédéterminée de sa trajectoire sur le deuxième secteur (S2).

11. Machine (58) selon la revendication précédente, **caractérisé en ce que** le carrousel (60) embarque plusieurs unités (10) de moulage, le point (T) de mire déterminé de chacune des unités (10) de moulage croisant l'axe (A3) de prise de vue de l'au moins un dispositif (56) de prise d'image lorsqu'elles occupent, à tour de rôle, ladite position prédéterminée de leur trajectoire.

12. Machine (58) selon la revendication 9, **caractérisée en ce que** l'au moins un dispositif (56) de prise d'image est fixé sur le carrousel (60) de manière que son axe (A3) de prise de vue soit orienté en permanence vers le point (T) de mire déterminé de l'unité (10) de moulage associée.

## Patentansprüche

1. Verfahren zur Ausrichtung einer achsensymmetrischen Vorform (14) mit einer Achse (A1), insbesondere einer Vorform aus thermoplastischem Material, in einer Umformungsform (12) einer Blasmaschine (58), wobei ein Hals (24) der Vorform (14) mit wenigstens einem Bezugspunkt (28A, 28B, 28C, 28D) versehen ist, der es ermöglicht, die Winkelposition der Vorform (14) um ihre Hauptachse (A1) im Verhältnis zu einer Referenzwinkelposition zu bestimmen, die im Verhältnis zur Form (12) fest ist, wobei das Verfahren Folgendes aufweist:
- einen Schritt (E1) des Einsetzens der Vorform (14) in eine Kavität (16) der Form (12), wobei der Hals (24) außerhalb der Form (12) herausragt;
- dann einen Schritt (E3) des Ausrichtens der so eingesetzten Vorform (14), bei dem die Vorform (14) im Verhältnis zur Form (12) automatisch um ihre Achse (A1) gedreht wird, bis sie die Referenzwinkelposition einnimmt;
**dadurch gekennzeichnet, dass** es einen Zwischenschritt (E2) aufweist, der ein Erfassen der aktuellen Winkelposition der Vorform (14) und ein Bestimmen eines Drehwinkels umfasst, um den die Vorform (14) gedreht werden muss, um ihre Referenzwinkelposition zu erreichen, wobei der Schritt (E3) des Ausrichtens am Ende des Zwischenschritts (E2) gestartet wird.

2. Verfahren nach dem vorhergehenden Anspruch, **dadurch gekennzeichnet, dass** das Bestimmen des Drehwinkels das Bestimmen eines Mindestwinkels (α) und einer zugehörigen Drehrichtung umfasst, in der die Vorform (14) gedreht werden muss, um ihre Referenzwinkelposition zu erreichen.

3. Verfahren nach dem vorhergehenden Anspruch, **dadurch gekennzeichnet, dass** das Erfassen der aktuellen Winkelposition der Vorform (14) Folgendes umfasst:
- eine erste Phase (P1) des Aufnehmens wenigstens eines Bilds des Halses (24) der eingesetzten Vorform (14) durch wenigstens eine Bildaufnahmevorrichtung (56), die bei der Bildaufnahme an einer vorbestimmten Position im Verhältnis zur Form (12) angeordnet ist;
- eine zweite Phase (P2) des Verarbeitens des wenigstens einen Bilds, um die Winkelposition des Bezugspunkts (28A, 28B, 28C, 28D) im Verhältnis zur Referenzwinkelposition zu erfassen.

4. Verfahren nach dem vorhergehenden Anspruch, **dadurch gekennzeichnet, dass** die Blasmaschine (58) eine Blasdüse (30) mit einer Glocke (38) umfasst, in der ein Organ (40) zur Drehmitnahme der Vorform (14) angeordnet ist, wobei die Düse (30) zum Gleiten auf der Achse der in die Form eingesetzten Vorform (14) zwischen folgenden Positionen gesteuert wird:
- einer eingefahrenen Endposition, in der die Düse (30) vollständig von der Vorform (14) und der Form (12) entfernt ist;
- einer Indexierungs-Zwischenposition der Vorform (14), in der das Organ (40) zur Mitnahme der Vorform (14) mit dem Hals (24) der Vorform (14) in Eingriff steht, wobei die Glocke (38) in einem Abstand über der Form (12) angeordnet ist, um wenigstens ein Halsteilstück mit den Bezugspunkten (28A, 28B, 28C, 28D) für die Bildaufnahmevorrichtung (56) sichtbar zu lassen;
- einer Blas-Endposition, in der die Glocke (38) mit der Form (12) in Kontakt steht, wobei sie den Hals (24) der Vorform (14) vollständig umgibt;
wobei das Erfassen der aktuellen Winkelposition der Vorform (14) durchgeführt wird, wenn die Düse (30) die Indexierungs-Zwischenposition einnimmt.

5. Verfahren nach einem der vorhergehenden Ansprüche, **dadurch gekennzeichnet, dass** der Hals (24) der Vorform (14) wenigstens zwei Bezugspunkte (28A, 28B, 28C, 28D) aufweist, und dadurch, dass bei der ersten Phase (P1) des Aufnehmens eines Bilds ein Einzelbild des Halses (24) von einer einzelnen Bildaufnahmevorrichtung (56) aufgenommen wird.

6. Verfahren nach dem vorhergehenden Anspruch, **dadurch gekennzeichnet, dass** der Hals (24) der Vorform (14) vier Bezugspunkte (28A, 28B, 28C, 28D) aufweist, die über den Umfang des Halses (24) verteilt sind.

7. Verfahren nach einem der vorhergehenden Ansprüche, **dadurch gekennzeichnet, dass** die Formungseinheit (10) auf einem Karussell (60) angebracht ist, das sich bezogen auf den Boden dreht, wobei die wenigstens eine Bildaufnahmevorrichtung (56) auf dem Karussell (60) angebracht und im Verhältnis zur Form (12) fest angeordnet ist.

8. Verfahren nach einem der Ansprüche 1 bis 6, **dadurch gekennzeichnet, dass** die Formungseinheit (10) auf einem Karussell (60) angebracht ist, das sich bezogen auf den Boden dreht, wobei die wenigstens eine Bildaufnahmevorrichtung (56) im Verhältnis zum Boden fest ist, so dass sie bei der ersten Phase (P1) des Zwischenschritts (E2) des Erfassens automatisch das Bild vom Hals (24) aufnimmt, wenn das Karussell (60) eine bestimmte Winkelposition im Verhältnis zur Bildaufnahmevorrichtung (56) einnimmt.

9. Blasmaschine (58) zur Durchführung des Verfahrens nach einem der vorhergehenden Ansprüche, **dadurch gekennzeichnet, dass** sie Folgendes aufweist:
- ein Karussell (60);
- wenigstens eine Formungseinheit (10), die auf dem Karussell (60) entlang einer Bahn angebracht ist, wobei die Formungseinheit (10) Folgendes aufweist:
-- eine Form (12) mit einer Kavität (16), die an einer Oberseite (18) der Form (12) durch eine Öffnung (20) zum Durchlass des Halses (24) einer Vorform (14) offen ist;
-- eine Blasdüse (30) mit einer Glocke (38), in der ein Organ (40) zur Drehmitnahme einer Vorform (14) angeordnet ist, wobei die Düse (30) zum Gleiten entlang einer Achse (A1) der Durchlassöffnung (20) zwischen folgenden Positionen gesteuert wird:
--- einer eingefahrenen oberen Endposition, wenn sich die Formungseinheit (10) auf einem ersten Sektor (S1) ihrer Bahn befindet, und in der sie vollständig von der Form (12) entfernt ist;
--- einer Indexierungs-Zwischenposition, wenn sich die Formungseinheit (10) auf einem zweiten Sektor (S2) ihrer Bahn befindet, und in der das Mitnahmeorgan (40) dazu bestimmt ist, mit dem Hals (24) einer in die Form (12) eingesetzten Vorform (14) in Eingriff zu stehen, wobei die Glocke (38) in einem Abstand über der Form (12) angeordnet ist;
- einer unteren Blas-Endposition, wenn sich die Formungseinheit (10) auf einem dritten Sektor (S3) ihrer Bahn befindet, und in der die Glocke (38) mit der Form (12) in Kontakt steht, wobei sie die Durchlassöffnung (20) vollständig umgibt;
**dadurch gekennzeichnet, dass** die Blasmaschine (58) wenigstens eine Bildaufnahmevorrichtung (56) aufweist, deren eine Bildaufnahmeachse (A3) zu einem bestimmten Zielpunkt (T) der Formungseinheit (10) gerichtet ist, der der Stelle entspricht, an der der Hals (24) einer Vorform (14) angeordnet sein soll, die in die Form (12) eingesetzt ist, wenn die Formungseinheit (10) auf dem zweiten Sektor (S2) ihrer Bahn ist.

10. Maschine (58) nach dem vorhergehenden Anspruch, **dadurch gekennzeichnet, dass** die wenigstens eine Bildaufnahmevorrichtung (56) im Verhältnis zum Boden fest montiert ist, so dass ihre Bildaufnahmeachse (A3) zum bestimmten Zielpunkt (T) gerichtet ist, wenn die Formungseinheit (10) eine vorbestimmte Position ihrer Bahn auf dem zweiten Sektor (S2) einnimmt.

11. Maschine (58) nach dem vorhergehenden Anspruch, **dadurch gekennzeichnet, dass** das Karussell (60) mehrere Formungseinheiten (10) aufweist, wobei der bestimmte Zielpunkt (T) jeder der Formungseinheiten (10) die Bildaufnahmeachse (A3) der wenigstens einen Bildaufnahmevorrichtung (56) kreuzt, wenn sie der Reihe nach die vorbestimmte Position ihrer Bahn einnehmen.

12. Maschine (58) nach Anspruch 9, **dadurch gekennzeichnet, dass** die wenigstens eine Bildaufnahmevorrichtung (56) so auf dem Karussell (60) befestigt ist, dass ihre Bildaufnahmeachse (A3) permanent zum bestimmten Zielpunkt (T) der zugehörigen Formungseinheit (10) gerichtet ist.

## Claims

1. Method for orienting an axisymmetric preform (14) of axis (A1), notably a preform made of thermoplastic material, in a forming mold (12) of a blowing machine (58), a neck (24) of the preform (14) being provided with at least one marker (28A, 28B, 28C, 28D) enabling determination of the angular position of the preform (14) about the main axis (A1) thereof in relation to a reference angular position that is static in relation to the mold (12), the method including:
- a step (E1) of installing the preform (14) in a cavity (16) of the mold (12), the neck (24) projecting outside the mold (12),
- then a step (E3) of orienting the preform (14) thus installed, in which the preform (14) is automatically rotated about the axis (A1) thereof in relation to the mold (12) until the reference angular position is reached,
**characterized in that** it includes an intermediate step (E2) involving detection of the current angular position of the preform (14) and determination of an angle of rotation through which the preform (14) has to be rotated to reach the reference angular position thereof, the orientation step (E3) being triggered on completion of the intermediate step (E2).

2. Method according to the preceding claim, **characterized in that** determination of the angle of rotation includes determination of a minimum angle (α) and of a related direction of rotation in which the preform (14) has to be rotated to reach the reference angular position thereof.

3. Method according to the preceding claim, **characterized in that** detection of the current angular position of the preform (14) includes:
- a first phase (P1) in which at least one image of the neck (24) of the installed preform (14) is captured by at least one image capture device (56) that is arranged in a predetermined position in relation to the mold (12) during image capture,
- a second phase (P2) in which the at least one image is processed to detect the angular position of the marker (28A, 28B, 28C, 28D) in relation to the reference angular position.

4. Method according to the preceding claim, **characterized in that** the blowing machine (58) includes a blow pipe (30) including a bell (38) containing a member (40) for driving the preform (14) in rotation, the pipe (30) being moved slidingly along the axis of the preform (14) installed in the mold between:
- a retracted end position in which the pipe (30) is completely separated from the preform (14) and from the mold (12),
- an intermediate indexing position of the preform (14) in which the drive member (40) of the preform (14) is engaged with the neck (24) of the preform (14), the bell (38) being arranged above and away from the mold (12) such as to expose at least a portion of the neck including the markers (28A, 28B, 28C, 28D) to the image capture device (56),
- a blowing end position in which the bell (38) is in contact with the mold (12) completely surrounding the neck (24) of the preform (14),
the current angular position of the preform (14) being detected when the pipe (30) is in the intermediate indexing position.

5. Method according to any one of the preceding claims, **characterized in that** the neck (24) of the preform (14) has at least two markers (28A, 28B, 28C, 28D), and **in that** a single image of the neck (24) is captured by a single image capture device (56) during the first image capture phase (P1).

6. Method according to the preceding claim, **characterized in that** the neck (24) of the preform (14) has four markers (28A, 28B, 28C, 28D) arranged about the circumference of the neck (24).

7. Method according to any one of the preceding claims, **characterized in that** the molding unit (10) is carried on a carousel (60) that rotates in relation to the ground, the at least one image capture device (56) being carried on the carousel (60) and arranged statically in relation to the mold (12).

8. Method according to any one of Claims 1 to 6, **characterized in that** the molding unit (10) is carried on a carousel (60) that rotates in relation to the ground, the at least one image capture device (56) being static in relation to the ground such as to automatically capture the image of the neck (24) during the first phase (P1) of the intermediate detection step (E2) when the carousel (60) is in a given angular position in relation to the image capture device (56).

9. Blowing machine (58) for implementing the method according to any one of the preceding claims, **characterized in that** it includes:
- a carousel (60),
- at least one molding unit (10) that is carried on the carousel (60) along a path, the molding unit (10) including:
-- a mold (12) including a cavity (16) that is opened on an upper face (18) of the mold (12) by a through-hole (20) for the neck (24) of a preform (14),
-- a blow pipe (30) including a bell (38) containing a member (40) for driving a preform (14) in rotation, the pipe (30) being moved slidingly along an axis (A1) of the through-hole (20) between:
--- an upper retracted end position when the molding unit (10) is positioned in a first sector (S1) of the path thereof and in which the molding unit is completely separated from the mold (12),
--- an intermediate indexing position when the molding unit (10) is positioned in a second sector (S2) of the path thereof and in which the drive member (40) is designed to be engaged with the neck (24) of a preform (14) installed in the mold (12), the bell (38) being arranged above and away from the mold (12),
- a lower blowing end position when the molding unit (10) is positioned in a third sector (S3) of the path thereof and in which the bell (38) is in contact with the mold (12) completely surrounding the through-hole (20),
**characterized in that** the blowing machine (58) includes at least one image capture device (56) in which an image capture axis (A3) is oriented towards a given focus point (T) of the molding unit (10) corresponding to the intended location of the neck (24) of a preform (14) installed in the mold (12) when the molding unit (10) is in the second sector (S2) of the path thereof.

10. Machine (58) according to the preceding claim, **characterized in that** the at least one image capture device (56) is mounted statically in relation to the ground such that the image capture axis (A3) thereof is oriented towards the given focus point (T) when the molding unit (10) is in a predetermined position of the path thereof in the second sector (S2).

11. Machine (58) according to the preceding claim, **characterized in that** the carousel (60) carries several molding units (10), the given focus point (T) of each of the molding units (10) crossing the image capture axis (A3) of the at least one image capture device (56) when said molding units occupy, in turn, said predetermined position of the path thereof.

12. Machine (58) according to Claim 9, **characterized in that** the at least one image capture device (56) is fastened to the carousel (60) such that the image capture axis (A3) thereof is permanently oriented towards the given focus point (T) of the related molding unit (10).
